# EUROPEAN PATENT SPECIFICATION

(11) **EP 4 176 192 B1**
(45) Date of publication and mention of the grant of the patent: **01.01.2025**
(21) Application number: 21742920.8
(22) Date of filing: 01.07.2021
(51) Int. Cl.: F16L 25/01

(54) **CABLE ASSEMBLY**
KABELANORDNUNG
ENSEMBLE CÂBLE

(30) Priority: 01.07.2020 IL 27578620
(43) Date of publication of application: 10.05.2023
(73) Proprietor: Strauss Water Ltd, 6037601 Or Yehuda (IL)
(72) Inventor: BEN BARUCH, Omer, 5552589 Kiryat Ono (IL); KRYSTAL, Eyal, 4425023 Kfar-Saba (IL); ASCHER, Dany, 3784000 Kibbutz Mishmarot (IL); EREZ, Meira, 71707 Modiie'n (IL); NAHUM, Orly, 5260223 Ramat Gan (IL)
(74) Representative: Zacco GmbH
(86) International application number: PCT/IL2021/050818
(87) International publication number: WO 2022/003701

(56) References cited:
- DE-A1- 102014 206 324
- GB-A- 2 056 611
- US-A- 4 840 574

## Description

### TECHNOLOGICAL FIELD

The present disclosure is generally in the field of composite cables, particularly multipurpose composite cables usable for fluids dispensing arrangements such as those disclosed in DE102014206324, US4840574 and GB2056611.

### BACKGROUND

Recent developments in water dispensing systems set forth needs for augmented connectivity between separate dispensing units, for providing both fluid communication and electrical coupling between the units. Such augmented connectivity can be simply achieved utilizing separate liquid conduits and electrical cables for each of the required dedicated connection/coupling. However, if connectivity between several water dispensing units is to be achieved for distributing the dispensing of the water by the dispensing units, such simplified solutions are mostly undesired, as they are susceptible to entanglements and faults.

There is thus a need for composite cable designs suitable for fluidly communicating and electrically coupling between a plurality of water dispensing units.

### GENERAL DESCRIPTION

The present disclosure provides composite cable assemblies configured to provide fluid communication and electrical coupling between water dispensing units. The composite cable assemblies comprise a fluid tube, an electric cable, an elongated sleeve/jacket accommodating the fluid tube and electric cable, and a composite connector arrangement. At least one end of the composite cable assembly configured for establishing the required fluid communication and electrical coupling between the water dispensing units. The composite connector arrangement comprises an electrical coupler/connector electrically connected to the electric cable of the composite cable assembly, a fluid coupler/connector connected in fluid communication to the fluid tube of the composite cable assembly, and at least one partitioning means configured to physically buffer between the electrical and fluid couplers/connectors, to thereby prevent migration of fluids from the fluid coupler to the electric coupler.

The electrical coupler/connector is mounted, in some embodiments, to a movable/slidable carrier configured for axial movement inside composite connector arrangement against a pushing force applied thereon by an elastic element (e.g., spring). This mechanism is configured to provide a certain degree of freedom for movement of the composite connector arrangement with respect to the water dispensing unit, while maintaining mechanical and electrical connection of the electrical coupler/connector due to the pushing force applied over the movable/slidable carrier.

In some embodiments, the composite connector arrangement comprises at least one latching mechanism configured to secure the composite connector arrangement to the chassis of the water dispensing unit. The at least one latching mechanism can be configured to firmly attach the composite connector arrangement to the chassis of the water dispensing unit, to withstand variable transient fluid pressures occurring in the connection between, and during, fluid exchange sessions, and thereby prevent unintentional electric and/or fluid decoupling between the composite connector arrangement and the fluid dispensing unit during operation. The latching mechanism can use a type of automated self-latching device having a latching tongue configured to snap into/over a latching recess/plate provided in the chassis of the water dispensing unit. The connector may comprise a latch release push button configured to move the latching tongue from the latching recess/plate whenever the composite connector arrangement is to be disconnected from the water dispensing unit.

In some embodiments, the partitioning means is configured to provide guiding means for ensuring the electric and fluid couplers/connectors of the composite connector arrangement are introduced into respective electric and fluid couplers/connectors of the water dispensing unit in a precise orientation needed to achieve optimal fluid and electrical connectivity therebetween.

By an aspect of this disclosure, there is provided a composite cable assembly comprising a fluid tube, an electric cable, an isolating sleeve accommodating the fluid tube and the electric cable, and a composite connector arrangement. The composite connector arrangement is configured to simultaneously establish fluid communication and electrical connection with respective connectivity means of a water dispensing unit upon connection of the composite connector arrangement to the water dispensing unit. The composite connector arrangement comprises, in some embodiments, distinct isolated electrical and water connection zones. The electrical connection zone comprises an electric coupler, configured to electrically connect the electric cable of the composite cable assembly to electrical wires of the water dispensing unit, and the water connection zone comprises a fluid coupler configured to establish fluid communication between the water tube and a fluid port of the water dispensing unit.

Optionally, but in some embodiments preferably, a partitioning member is used to physically buffer between the electric and water connection zones of the composite connector arrangement for preventing passage of water from the water connection zone to the electrical connection zone. The electrical connection zone is located, in some embodiments, above the water connection zone to substantially prevent migration of water from the water connection zone to the electrical connection zone.

In some embodiments, the fluid coupler comprises a male conduit coupler. The electric cable comprises, in some embodiments, one or more wires configured to communicate control and/or data signals. Optionally, but in some embodiments preferably, the electric cable comprises at least two electric wires configured to communicate the control and/or data signals. The electric cable can comprise one or more wires configured to deliver a power supply to the water dispensing unit. Optionally, but in some embodiments preferably, at least two electric wires are used to deliver the power supply to the water dispensing unit.

In some embodiments, the electric coupler comprises female electric connection elements, each enclosed inside an electrically insulated socket.

The partitioning member is configured, in some embodiments, in form of a tongue member protruding from a surface area of the composite connector arrangement. The partitioning tongue member can be configured to guarantee proper orientation of the composite connector assembly and accurate alignment of the electric and fluid couplers when connected to the water dispensing unit.

Optionally, but in some embodiments preferably, the partitioning member is a cylindrical element configured to laterally enclose the electric coupler thereinside. The cable assembly can comprise an orienting projection axially extending along a length of the partitioning member. The orienting projection can be configured to guarantee proper orientation of the composite connector assembly and accurate alignment of the electric and fluid couplers when connected to the water dispensing unit.

In some embodiments, the electric coupler is a type of male plug connector having a number of electrically insulated electrical contacts distributed along its length. The partitioning member can be a cylindrical element configured to concentrically and laterally enclose the electric coupler thereinside. The partitioning member comprises, in some embodiments, a number of elongated openings axially extending along a length thereof for forming a plurality of arch-shaped tongues. At least one of the plurality of arch-shaped tongues can be longer, or shorter, than the other arch-shaped tongues, to establish a mechanism guaranteeing proper orientation of the composite connector arrangement and accurate alignment of the electric and fluid couplers, when connected to the water dispensing unit.

The cable assembly according to the invention comprises a movable carrier and an elastic element mounted inside the composite connector arrangement. The movable carrier is configured to carry the electric coupler and move inside the composite connector arrangement against forces applied by the elastic element, to thereby provide a degree of freedom for movements of the composite connector arrangement with respect to the water dispensing unit, while maintaining electrical connection of the electric coupler (*i.e.* while preventing electrical disconnections).

The composite connector arrangement may comprise a fastening mechanism configured to secure the connector arrangement to the water dispensing unit upon connection thereto. Optionally, the fluid coupler is configured to be received in a locking mechanism provided in the water dispensing unit and configured to substantially immobilize it thereinside.

Optionally, an identification mechanism is provided in the composite connector arrangement to authenticate the cable assembly upon connection to the dispensing unit.

Another aspect of this disclosure provides a composite connector arrangement that comprises an electric coupler configured to establish electrical connection with electrical wires of a water dispensing unit, and a fluid coupler configured to establish fluid communication with a fluid port of the water dispensing unit. The composite connector arrangement is configured to simultaneously establish the fluid communication and electrical connection upon connection thereof to the water dispensing unit. The composite connector arrangement can have distinct isolated electrical and water connection zones, wherein the electrical connection zone comprises the electric coupler, and the water connection zone comprises the fluid coupler. A partitioning member can be used in the composite connector arrangement to physically buffer between the electrical and water connection zones and preventing passage of water from the water connection zone to the electrical connection zone.

Optionally, but in some embodiments preferably, the electrical connection zone of the composite connector arrangement is located above the water connection zone to substantially prevent migration of water from the water connection zone to the electrical connection zone. The fluid coupler of the composite connector arrangement comprises, in some embodiments, a male conduit coupler. The electric coupler of the composite connector arrangement comprises, in some embodiments, female electric connection elements, each enclosed inside an electrically insulated socket.

The partitioning member of the composite connector arrangement can be implemented by a tongue element protruding from a surface of the composite connector arrangement and configured to guarantee proper orientation of the composite connector assembly and accurate alignment of the electric and fluid couplers when connected to the water dispensing unit. Alternatively, the partitioning member of the composite connector arrangement can be implemented by a cylindrical element configured to laterally enclose the electric coupler thereinside. An orienting projection axially extending along a length of the partitioning member can be used to guarantee proper orientation of the composite connector assembly and accurate alignment of the electric and fluid couplers when connected to the water dispensing unit.

The electric coupler of the composite connector arrangement is implemented, in some embodiments, by a type of male plug connector having a number of electrically insulated electrical contacts distributed along its length. The partitioning member of the composite connector arrangement can be implemented by a cylindrical element configured to concentrically and laterally enclose this electric coupler thereinside.

In embodiments wherein the partitioning member of the composite connector arrangement is implemented by a cylindrical element, the partitioning member can have a number of elongated openings axially extending along a length thereof for forming a plurality of arch-shaped tongues. Optionally, but in some embodiments preferably, at least one of the plurality of arch-shaped tongues is made longer, or shorter, than the other arch-shaped tongues, to guarantee proper orientation of the composite connector arrangement and accurate alignment of the electric and fluid couplers, when connected to the water dispensing unit.

A fastening mechanism can be used to secure the composite connector arrangement to the water dispensing unit upon connection thereto. In some embodiments the fluid coupler is configured to be received in a locking mechanism provided in the water dispensing unit and configured to substantially immobilize it. The composite connector arrangement comprises, in some embodiments, an identification mechanism for authentication thereof. The electric coupler of the composite connector arrangement can be configured to communicate control and/or data signals. The electric coupler of the composite connector arrangement can be also configured to deliver a power supply to the water dispensing unit.

The composite connector arrangement comprises, in some embodiments, a movable carrier and an elastic element mounted inside the composite connector arrangement. The movable carrier can be configured to carry the electric coupler and move inside the composite connector arrangement against forces applied by the elastic element, to thereby provide a degree of freedom for movements of the composite connector arrangement while maintaining electrical connection of the electric coupler.

### BRIEF DESCRIPTION OF THE DRAWINGS

In order to understand the invention and to see how it may be carried out in practice, embodiments will now be described, by way of non-limiting example only, with reference to the accompanying drawings. Features shown in the drawings are meant to be illustrative of only some embodiments of the invention, unless otherwise implicitly indicated. In the drawings like reference numerals are used to indicate corresponding parts, and in which:

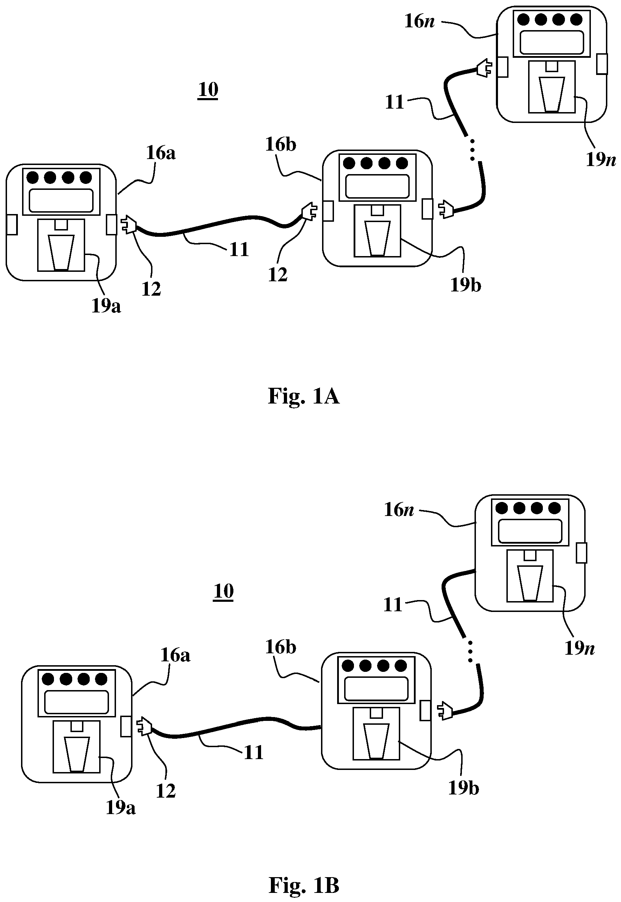

**Figs. 1A** and **1B** schematically illustrate a distributed water dispending system according to some possible embodiments, wherein **Fig. 1A** shows a configuration wherein a composite cable assembly is detachably connected to each water dispensing unit, and **Fig. 1B** shows a configuration wherein at least some of the water dispensing units comprises a composite cable assembly integrally/fixedly embedded therein for connection to another water dispensing unit of the system;

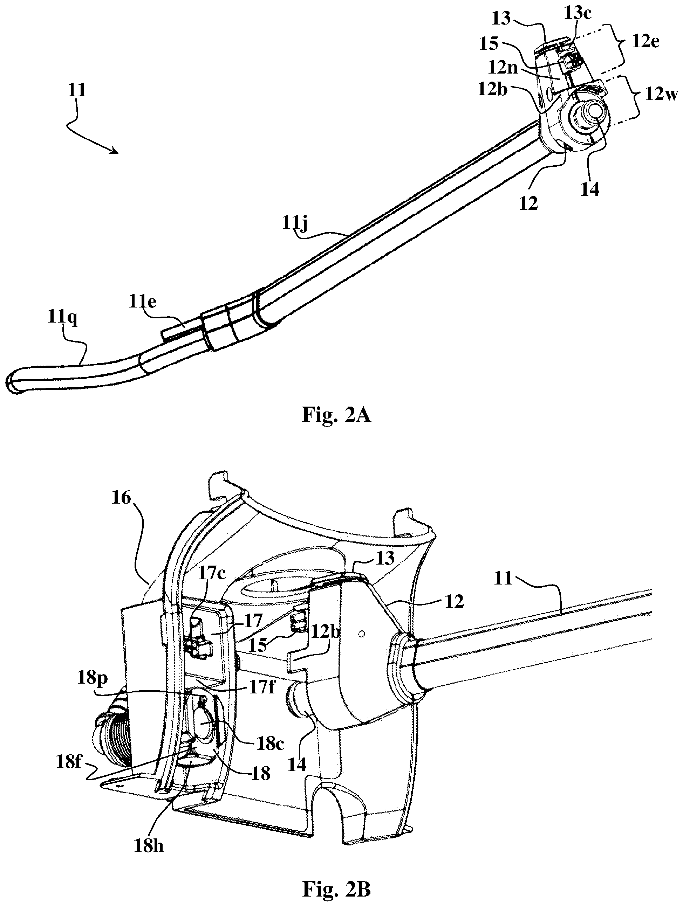

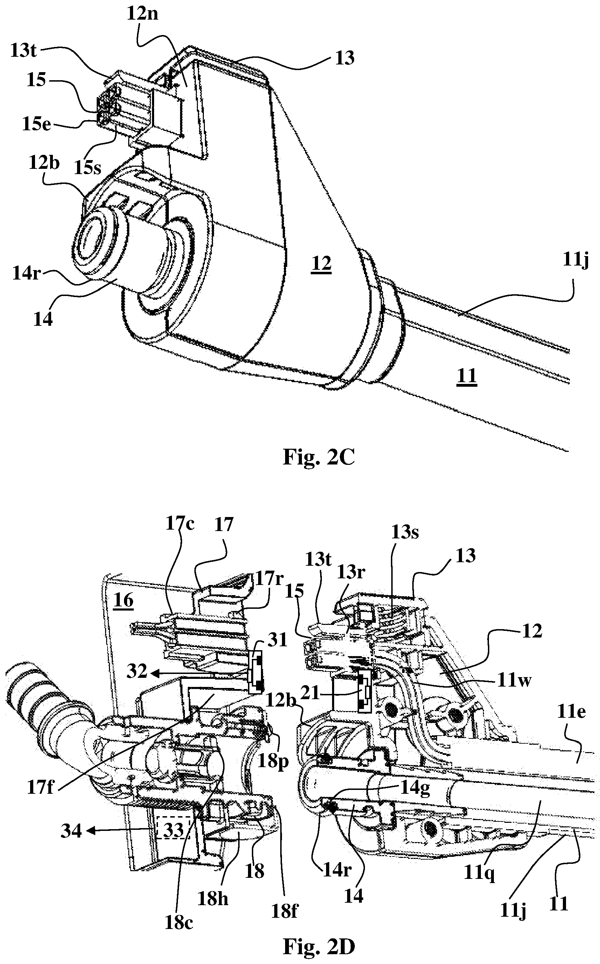

**Figs. 2A** to **2D** schematically illustrate a composite cable assembly, and a composite connector arrangement thereof, according to some possible embodiments, wherein **Fig. 2A** shows a perspective view of the composite cable and its connector, **Fig. 2B** demonstrates attachment of the composite connector arrangement to a water dispensing unit, **Fig. 2C** shows a perspective view of the composite connector arrangement, and **Fig. 2D** shows a sectional view of the composite connector arrangement and of a connection port of the water dispensing unit;

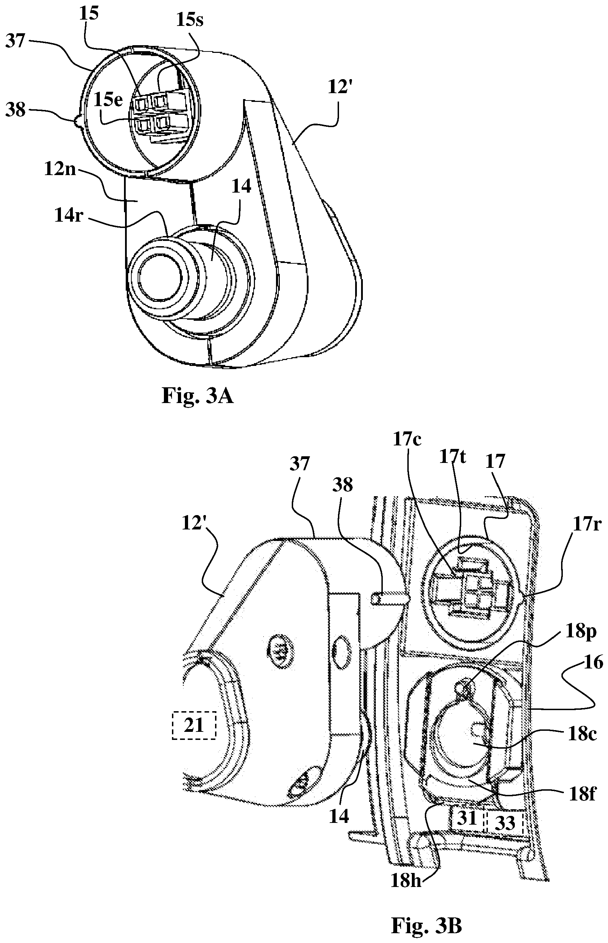

**Fig. 3A** and **3B** schematically illustrate a composite connector arrangement according to some other possible embodiments, wherein **Fig. 3A** shows a perspective view of the composite connector arrangement, and **Fig. 3B** demonstrates attachment of the composite connector arrangement to a water dispensing unit;

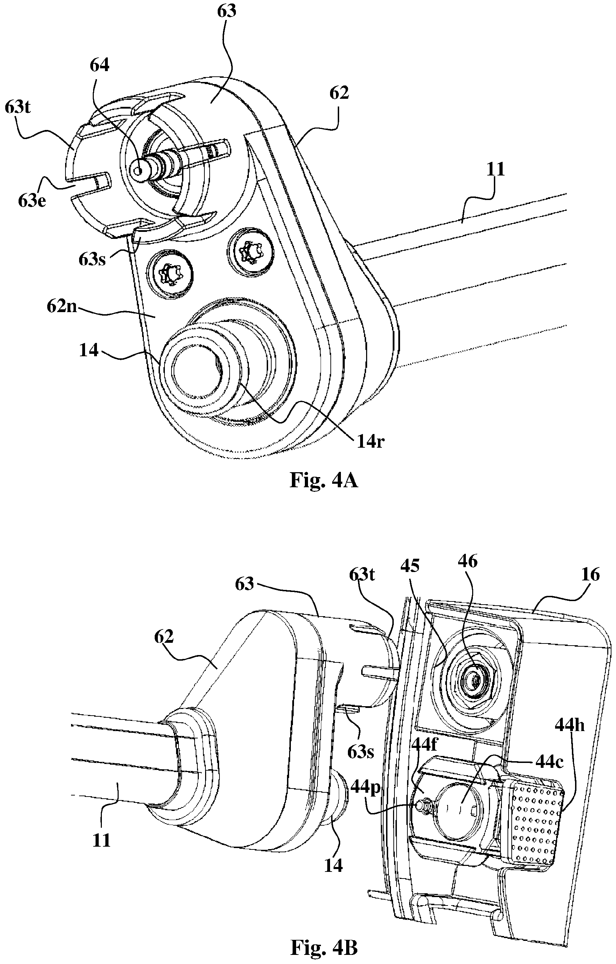

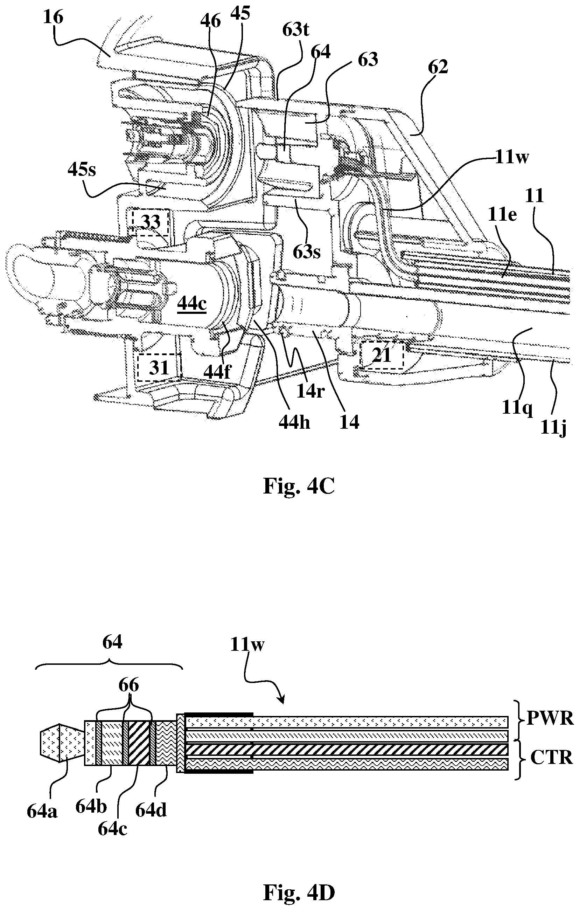

**Figs. 4A** to **4D** schematically illustrate a composite connector arrangement according to some other possible embodiments, wherein **Fig. 4A** shows a perspective view of the composite connector arrangement, **Fig. 4B** demonstrates attachment of the composite connector arrangement to a water dispensing unit, **Fig. 4C** shows a sectional view of the composite connector arrangement and of a connection port of the water dispensing unit, and **Fig. 4D** shows a male plug electrical coupler of the connector arrangement;

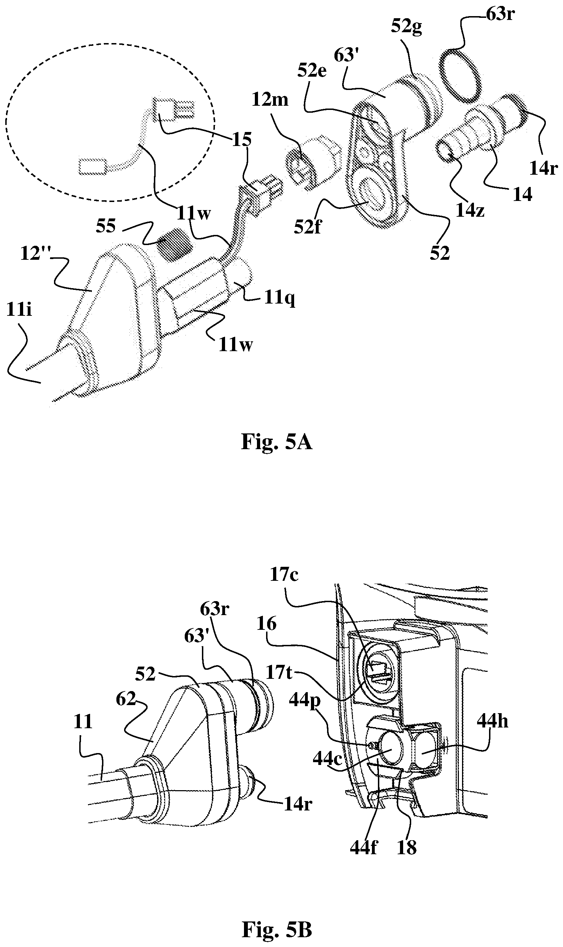

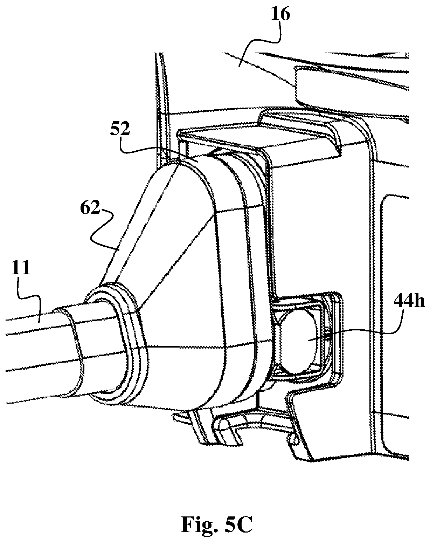

**Figs. 5A** to **5C** schematically illustrate a composite connector arrangement according to some other possible embodiments, wherein **Fig. 5A** shows an exploded view of the composite connector assembly, and **Figs. 5B** and **5C** respectively show the composite connector assembly before and after connection thereof to a water dispensing unit; and

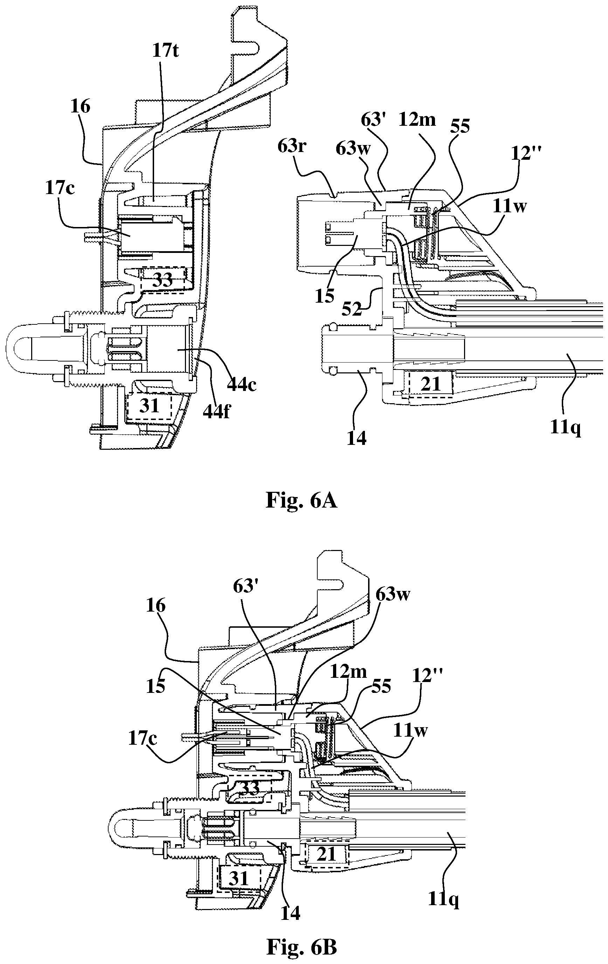

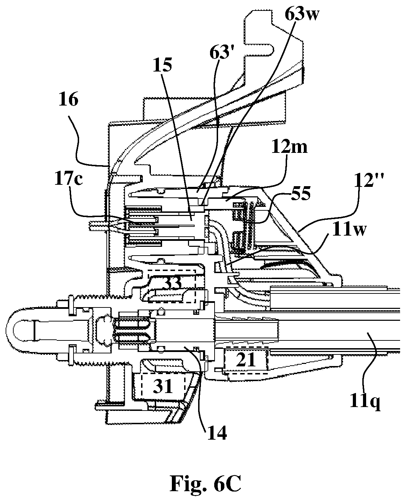

**Figs. 6A** to **6C** are sectional view schematically illustrating connection of the composite connector arrangement of **Figs. 5A** to **5C** according to some other possible embodiments to the water dispensing unit, wherein **Fig. 6A** shows the composite connector arrangement and the water dispensing unit before the connection between them is established, and wherein **Figs. 6B** and **6C** respectively show the composite connector arrangement and the water dispensing unit during and after the connection between them is established.

### DETAILED DESCRIPTION OF EMBODIMENTS

One or more specific embodiments of the present disclosure will be described below with reference to the drawings, which are to be considered in all aspects as illustrative only and not restrictive in any manner. In an effort to provide a concise description of these embodiments, not all features of an actual implementation are described in the specification. Elements illustrated in the drawings are not necessarily to scale, or in correct proportional relationships, which are not critical. Emphasis instead being placed upon clearly illustrating the principles of the invention such that persons skilled in the art will be able to make and use the composite cable assemblies and their composite connector arrangements, once they understand the principles of the subject matter disclosed herein. This invention may be provided in other specific forms and embodiments without departing from the essential characteristics described herein.

The present application discloses composite cable assemblies configured to provide both fluid communication and electrical coupling between a plurality of water dispensing units configured to distribute the dispensing of one or more water products by the dispensing units. The cable assembly comprises in some embodiments a fluid tube configured for streaming the water product therethrough, electrical supply wires configured to provide electrical power supply from one water dispensing unit to another, data/control signaling wires configured to communicate data and/or control signals between the water dispensing units, and at least one composite connector arrangement having electric and fluid couplers configured for quickly and safely establishing the required fluid and electrical connectivity between the composite cable assembly and the connector port(s) of the water dispensing unit(s).

The composite cable assembly is configured, in some embodiments, to guarantee that the electrical wires of the cable assembly are substantially above/on top of the fluid tube, and electrically isolated and insulated therefrom, to thereby substantially prevent short circuits that may be caused due to water leakages. The composite connector arrangement of the composite cable assembly is configured, in some embodiments, to define separate and partitioned fluid and electrical connection zones, to prevent introduction of water from the fluid coupler to the electrical wires coupler of the composite connector arrangement.

Safety of the composite connector arrangement is further improved, in some embodiments, by utilizing a male tube coupler at the water connection zone of the composite connector arrangement and a female electrical coupler at the electrical connection zone of the composite cable assembly. Particularly, the electrical coupler of the composite connector arrangement comprises, in some embodiments, for each wire of the composite cable assembly an electrically conducting socket contained inside an electrically insulating sleeve configured to be received inside a respective electrically insulating compartment containing an electrically conducting plug of the male electrical coupler of the water dispensing unit. This way, the electrical coupling sockets of the composite connector arrangement are maintained electrically insulated at all times, and sealed electrical connection is achieved once the electrical insulated sleeves of the connector arrangement are received inside the electrically insulated compartments of the male electrical coupler of the water dispensing unit.

The composite connector arrangement comprises, in some embodiments, at least one partitioning means configured to physically buffer between its electric and fluid couplers, and thereby prevent migration of fluids (water) from the fluid coupler to the electric coupler of the composite connector arrangement.

For an overview of several example features, process stages, and principles of the invention, the examples of composite cable assemblies illustrated schematically and diagrammatically in the figures are intended for water dispensing systems/units. These water dispensing systems/units are shown as one example implementation that demonstrates a number of features, processes, and principles used to provide composite connectivity between water dispensing units, but they are also useful for other applications and to fluids other than water, and can be made in different variations. Therefore, this description will proceed with reference to the shown examples, but with the understanding that the invention recited in the claims below can also be implemented in myriad other ways, once the principles are understood from the descriptions, explanations, and drawings herein. All such variations, as well as any other modifications apparent to one of ordinary skill in the art and useful in fluid dispensing applications may be suitably employed, and are intended to fall within the scope of this disclosure.

**Fig. 1A** schematically illustrates a liquid distribution system **10** comprising a plurality of water dispensing units **16a**, **16b**,..., **16*n*** (collectively referred to herein as dispensing units **16),** each water dispensing unit comprising a respective dispenser **19a, 19b**,..., **19*n*** (collectively referred to herein as dispensers **19).** The dispensing units **16** are connected one to the other by composite cable assemblies **11,** each composite cable assembly **11** configured to provide both fluid communication and electrical coupling between the dispensing units **16.**

At least one of the dispensing units **16** is configured to apply upon demand at least one water treatment (*e.g*., filter, disinfect, purify, and/or distill) to a stream of source water (*e.g.,* tap water) supplied thereto, and direct the stream of treated water product thereby produced to its dispenser **19,** or to at least one other dispensing unit **16.** The treated water product directed to the dispenser **19** can be processed at each dispensing unit **16** before it is dispensed, by applying one or more processes (*e.g*., cooling, heating, freezing, carbonation, beverage preparation, energizing, mineralizing, purifying, and/or suchlike) thereto before it is dispensed by the dispenser **19.**

As seen in **Fig. 1A****,** the composite cable assembly **11** may comprise a composite connector arrangement **12** at each of end thereof for simultaneously establishing the required fluid communication and electrical coupling with one of the dispensing units **16,** upon connection thereto.

Optionally, but in some embodiments preferably, at least some of the dispensing units **16** comprise a composite cable assembly **11** integrally/fixedly connected thereto. **Fig. 1B** demonstrate such possible embodiment, wherein the dispensing units **16b** and **16n** comprises a composite cable assembly as an integral part. In this embodiment the composite cable assembly **11** is attached at one end thereof to the dispensing unit **16,** and its free end is provided with a composite connector arrangement **12,** for providing electrical and fluid coupling with another one of the dispensing units **16.** Accordingly, at least one of the dispensing units **16** can be provided without an integral composite cable assembly, which in this non-limiting example is **16a.**

The dispensing unit **16a** can be the main unit configured to supply a treated (*e.g*., filtered) water product to at least some of the other dispensing units **16b**,... **16n,** in the system **10,** as described and illustrated in co-pending and concomitantly filed Israeli Patent Application of the same Application hereof titled "*liquid dispensing arrangements and methods*", filed under attorney docket No. 2709873, the disclosure of which is incorporated herein by reference. The other dispensing units **16b,... 16n,** can be implemented by any of the secondary unit embodiments described in the above-mentioned co-pending Israeli Patent Application filed under attorney docket No. 2709873, and/or the disinfection apparatus embodiments described and illustrated in co-pending concomitantly filed Israeli Patent Application of the same Application hereof titled "*Water Disinfection Apparatus*", filed under attorney docket No. 2709916, the disclosure of which is incorporated herein by reference.

**Fig. 2A** shows a perspective view of a composite cable assembly **11** with the composite connector arrangement **12** at one extremity thereof. In this specific and non-limiting example the composite cable assembly **11** comprises a water tube **11q** for streaming the treated water product therethrough, electrical cable **11e** for establishing electrical connectivity, an isolating sleeve/jacket **11j** tightly holding the water tube **11q** and the electric cable **11e**, and the composite connector arrangement **12** to which the sleeve **11j**, water tube **11q**, and electrical cable **11e,** are connected.

The isolating sleeve/jacket **11j** can be made of a thin flexible and/or stretchable material *e.g*., polyester, nylon, PET, Velcro, Mylar, Carbon fiber, Kevlar, Tinned copper, Fiberglass, or suchlike, configured to hold and substantially immobilize the water tube **11q** and electrical cable **11e** passing therethrough. Optionally, but in some embodiments preferably, the isolating sleeve/jacket **11j** is a type of a braided sleeve / woven wrap, which may be fabricated from, or comprise, flame retardant materials.

The sleeve/jacket **11j** of the composite cable assembly is configured to substantially maintain the electric cable **11e** on top of the tube **11q** for safety and to comply with the water and electric zones separation at the composite connector arrangement **12.** Optionally, but in some embodiments preferably, the water tube **11q** is made of a flexible food-grade material (food contact substance - FCS), such as, but not limited to, silicone, Teflon, Polyethylene (PE), or suchlike. Optionally, but in some embodiments preferably, the water tube **11q** is a type of reinforced silicone tube. Similarly, the electric cable **11e** can be a type of flexible electrical cable *e.g.*, comprised of braided and/or stranded conductors, to thereby provide the composite cable assembly **11** sufficient flexibility for easily mounting and maneuvering it between the dispensing units **16.**

The electric wires of the electric cable **11e** can be made of any suitable electrically conducting material, such as, but not limited to, Copper. Optionally, but in some embodiments preferably, the electric cable **11e** comprises electrically insulated power supply wires for delivering electric power supply from one dispensing unit **16** to another, and electrically insulated data/control signaling wires for exchanging data and/or control signals between the dispensing units thereby connected.

As also seen in **Fig. 2A****,** the composite connector **12** comprises a fluid coupler **14** configured to connect to a fluid (inlet or outlet) port of one of the dispensing units **16** and establish fluid communication therewith, an electric coupler **15** configured to connect to a respective electric coupler of a dispensing unit **16,** and a quick release/attachment press button **13.** The front face **12n** of the composite connector **12** has a generally truncated tear shape, which is partitioned into a distinct electrical connection zone **12e,** in which the electric coupler is located, and a distinct fluid connection zone **12w,** in which the fluid coupler **14** is located.

Optionally, but in some embodiments preferably, the fluid connection zone **12w** of the composite connector arrangement **12** is located below the electrical connection zone **12e,** to thereby prevent wetting the electric coupler **15** by water that may leak during connection to the dispensing unit **16.** In order to further isolate between the electric coupler **15** and the fluid coupler **14,** and improve safety, a partitioning assembly **12b** is formed to project from the front face **12n** of the composite connector arrangement **12.**

The partitioning assembly **12b** can be further configured to facilitate aligning between the electric and water coupling assemblies of the composite connector **12** and of the dispensing unit **16.** With reference to **Figs. 2B** and **2C****,** in this specific and non-limiting example the upper portion of the partitioning assembly **12b** is made substantially flat and horizontal for sliding beneath a respective flat and horizontal wall section **17f** of an electric coupling assembly **17** of the dispensing device **16,** for locating the electric coupler **15** in a required height for it to precisely mate with the respective electric coupler **17c** of the dispensing unit **16.** The bottom portion of the partitioning assembly **12b** is of circular/arch shape substantially concentric with the fluid coupler **14,** for sliding over a respective circular/arched shaped portion of the fluid port **18** of the dispensing unit **16,** to thereby accurately direct the fluid coupler **14** to mate with a respective fluid coupler **18c** of the fluid port **18.** For the sake of simplicity, **Fig. 2B** shows only a portion of the dispensing unit **16** containing the fluid and electric couplers, **18c** and **17c.**

Optionally, but in some embodiments preferably, the fluid coupler **14** comprises a cylindrical quick male fluid connector, and the electric coupler **15** comprises female electric connection elements **15e.** As best seen in **Fig. 2C****,** each of the female electric connection elements **15e** of the electric coupler **15** is enclosed inside an electrically insulating socket **15s,** to thereby provide electrical insulation therebetween, and substantially prevent water leakage droplets from reaching the female electric connectors **15e** enclosed thereinside.

As seen in **Fig. 2B****,** in some embodiments the fluid coupler **18c** of the water dispensing unit **16** comprises a latching mechanism comprised of a ring-shaped latch plate **18f** gripper configured to receive the fluid coupler **14** of the composite connector arrangement **12** therein and elastically abut thereto to securely hold and substantially immobilize it. A release pin **18p** can be used to hold the ring-shaped latch plate **18f** in its disengaged state before the fluid coupler **14** of the composite connector arrangement **12** is introduced therethrough. When the composite connector arrangement is connected to the water dispensing unit **16** and its front face **12n** is pressed against the chassis of the water dispensing unit **16,** the release pin **18p** is elastically pressed inwardly (*e.g*., against a pushing spring - not shown) to release the disengaged latch plate **18f.** In this state the latch plate **18f** is elastically pressed downwardly onto the fluid coupler **14.**

A release plate **18h** coupled to the latch plate **18f** underneath the fluid port **18** is pushed upwardly whenever the composite connector arrangement **12** is to be released from the water dispensing unit **16.** Once the release plate **18h** is pressed, the latch plate **18f** is lifted upwardly to release its attachment over the fluid coupler **14** of the composite connector arrangement **12,** and consequently the release pin **18p** elastically projects outwardly to hold and immobilize the latch plate **18f** in its unengaged state. In this specific and non-limiting embodiment the release plate **18h** of the fluid port **18,** and the press button 13 of the composite connector arrangement should be simultaneously pressed to release the composite connector arrangement **12** from the water dispensing arrangement.

In this specific and non-limiting example, the electric coupler **15** is a four sockets substantially square connector configured to connect two power supply electric wires, and two data/control signaling wires (**11w** in **Fig. 2D****),** of the composite cable assembly **11** with respective electric power supply and signaling wires of the dispenser unit **16.** In some embodiments the data/control signaling wires of the composite cable assembly **11** are configured for asynchronous communication between the dispensing units **16** to which the composite cable assembly **11** is connected. As seen in **Fig. 2C****,** the front face **12n** of the composite connector arrangement **12** comprises a fastening clip/latch **13t** configured to snap onto/over a respective fastening ledge **(17r** in **Fig. 2D****)** of the dispenser unit **16,** and securely hold the composite connector arrangement **12** in place once connected thereto.

**Fig. 2D** shows a sectional view of the composite connector arrangement **12,** and of respective couplers of the dispensing unit **16.** As seen, the quick release/attachment press button **13** is coupled to the fastening clip **13t,** and it is forced to maintain its closed (fastened) state by a press spring **13s.** The fastening clip **13t** is configured to move about a levering element **13r** for elevating the distal end of the fastening clip **13t** whenever the press button **13** is pressed against the upward force of the press spring **13s.** In addition, the fluid coupler **14** comprises an O-ring **14r** fitted into a circular groove **14g** and configured to sealably fasten the fluid coupler **14** to the fluid coupler **18c** of the fluid port **18.** This way, upon connecting the composite connector arrangement **12** to the dispensing unit **16,** the fastening clip **13t** snaps onto the fastening ledge **17r,** the latch plate **18f** is pressed about the fluid coupler **14,** and the O-ring **14r** is tightly fitted into the fluid coupler **18c** of the dispensing assembly, thereby firmly securing the composite connector arrangement **12** to the dispensing unit **16,** and establishing the required fluid communication and electrical connectivity.

Optionally, and in some embodiments preferably, the composite connector arrangement **12** comprises an identification mechanism configured to prevent use of unauthorized (*e.g*., counterfeit) cables with the dispensing units **16.** A respective detection circuitry **31** can be used in the dispensing unit **16** for identifying the presence of the identification circuitry **21** upon connection of the composite cable assembly **11,** and responsively issuing an authorization signal **32.** The dispensing unit **16** can be configured to permit water passage and electric connection via the composite cable assembly **11** only after the authorization signal **32** is issued by detection circuitry **31,** to thereby prevent usage of unauthorized/counterfeit cables/tubes. The detection circuitry **31** can be configured to establish electric contact with identification circuitry **21** and responsively issue the authorization signal **32.**

In possible embodiments the identification circuitry **21** may have an embedded identifier, and the detection circuitry **31** can be configured to fetch the identifier embedded in the identification circuitry **21** and incorporate it in the authorization signal **32** thereby issued. The dispensing unit **16** can be configured to permit water passage and electric connection via composite cable assembly **11** after extracting and validating the identifier received with the authorization signal **32.** Alternatively, or additionally, micro-switches **33** can be used in the dispensing unit **16** configured for identifying simultaneous connection of the fluid coupler **14** and the electric coupler **15** and responsively issue a permission signal **34** used by the dispensing unit **16** to permit usage of the composite cable assembly **11,** to thereby prevent use of separately connected fluid tube and electric cable.

**Figs. 3A** and **3B** schematically illustrates another possible composite connector arrangement **12'** according to some possible embodiments. The composite connector arrangement **12** (shown in **Figs. 2A-D**) and **12'** share many similar features designated by same reference numerals. The main difference between these composite connector arrangements is in replacing the arched-shaped partitioning assembly **12b** of composite connector arrangement **12** by a cylindrical partitioning assembly **37** in which the electric coupler **15** is laterally enclosed. The cylindrical partitioning assembly **37** is configured to physically buffer between the electric and fluid couplers, and to thereby prevent migration of fluids from the fluid coupler **14** to the electric coupler **15.**

The cylindrical partitioning assembly **37** comprises an orienting projection **38** axially extending along a length thereof. The orienting projection **38** is configured to guide, and accurately orient, the insertion of the electric and fluid couplers, **15** and **14,** of the composite connector arrangement **12'** to their corresponding couplers, **17c** and **18c,** of the water dispensing unit **16.** The electric coupling assembly **17** is configured to receive the cylindrical partitioning assembly **37** in a respective cylindrical socket **17t,** and guarantee accurate alignment of the fluid and electric couplers by receiving the orienting projection **38** inside the guiding channel **17r** extending along a length of the internal wall of the cylindrical socket **17t.** In addition, the composite connector arrangement **12'** is configured without the fastening clip/latch **13t** and its press button **13,** relying mainly on the ring-shaped latch plate **18f** gripper of the fluid port **18** to maintain the connector arrangement immobilized once it is connected to the water dispensing unit **16.**

As shown in **Fig. 3B****,** the composite connector assembly **12'** may have an identification circuitry **21,** as described with reference to **Fig. 2D****,** and the dispensing unit **16** may have a corresponding detection circuitry **31** for identifying the presence of the identification circuitry **21** in the composite connector **12',** when connection to the dispensing unit **16** is established, and permit usage of the composite cable assembly **11.** Alternatively, or additionally, micro-switches **33** can be used in the dispensing unit **16** for identifying simultaneous connection of the fluid coupler **14** and the electric coupler **15,** and permit usage of the composite cable assembly **11,** as described hereinabove with reference to **Fig. 2D****.**

**Figs. 4A** to **4D** show another possible composite connector arrangement **62** according to some possible embodiments. The composite connector arrangement **12** (shown in **Figs. 2A-D**) and **62** share many similar features designated by same reference numerals. The main difference between these composite connector arrangements is in electric coupler **64** and the partitioning assembly **63** of the composite connector arrangement **62,** as explained in details hereinbelow. As seen in **Fig. 4A****,** the electric coupler **64** is a type of four pole male plug connector having four electrically insulated electrical contacts along its length. This configuration of the electric coupler **64** substantially simplifies the attachment procedure of the composite connector assembly **62,** as it requires insertion of a single contact element into a corresponding electric female coupler **(46** in **Fig. 4B****)** provided in the water dispensing unit **16.**

The partitioning assembly **63** is a cylindrically-shaped element configured to concentrically and laterally enclose the electric coupler **64.** A distal portion of the partitioning assembly **63** comprises a number of elongated openings **63e** axially extending along a length thereof, thereby forming a plurality of arch-shaped tongues **63t.** The arch-shaped tongues **63t** are configured to provide some level of elasticity to the partitioning assembly **63** for facilitating insertion thereof into a respective cylindrical socket **(45** in **Fig. 4B****)** of the water dispensing unit **16.** In some possible embodiments at least one arch-shaped tongue **63s** of the partitioning assembly **63** is made shorter, or longer, than the other arch-shaped tongues **63t,** to thereby provide attachment orienting means, as will be explained hereinbelow in details.

**Fig. 4B** demonstrates attachment of the composite connector arrangement **62** to the water dispensing unit **16.** As seen, the water dispensing unit **16** comprises a four pole female electric coupler **46** concentrically enclosed inside a cylindrical socket **45** configured to snugly receive the cylindrical partitioning assembly **63.** In this specific and non-limiting example one arch-shaped tongue **63s** of the cylindrical partitioning assembly **63** is shorter than the other arch-shaped tongues **63t** to guarantee that the cylindrical partitioning assembly **63** is inserted into the cylindrical socket **45** in proper orientation.

The fluid coupler **44c** of the water dispensing unit **16** comprises a laterally oriented gripping mechanism having a lateral release button **44h** configured to laterally move the ring-shaped latch plate **44f** for releasing its grip over the fluid coupler **14** whenever the composite connector assembly **62** is disconnected from the water dispensing unit **16.** In this case, the release pin **44p** is located at an opposite lateral side of the fluid coupler **44c,** and it is configured to be elastically pushed inwardly when pushed by the front face **62n** of the composite connector arrangement **62,** to thereby release the ring-shaped latch plate **44f** to hold and immobilize the fluid coupler **14** once inserted into the female fluid coupler **44c** of the water dispensing unit **16.** When the lateral release button **44h** is pushed towards the fluid coupler **44c,** the release pin **44p** elastically projects outwardly to hold the ring-shaped latch plate **44f** in its disengaged state to thereby allow removal of the male fluid coupler **14** from the female fluid coupler **44c.**

**Fig**. **4C**shows a sectional view of the composite connector assembly **62** and of a portion of the water dispensing unit **16.** As seen, the cylindrical socket **45** in this non-limiting example is configured to define a limiting cavity **45s** which depth is shorter than the depth of the other sections of the cylindrical socket **45,** and configured to receive the shorter arch-shaped tongue **63s** of the cylindrically-shaped partitioning assembly **63.** This configuration of the cylindrical socket **45** is used to prevent improper attachment of the composite connector arrangement **62** to the water dispensing unit **16,** and to accurately guide the electric and fluid couplers, **64** and **14,** of the composite connector arrangement **62** to mate with their respective couplers, **46** and **44c,** at the water dispensing unit **16.**

As also shown in **Fig. 4C****,** the composite connector assembly **62** may have an identification circuitry **21,** as described with reference to **Fig. 2D****,** and the dispensing unit **16** may have a corresponding detection circuitry **31** for identifying the presence of the identification circuitry **21** in the composite connector assembly **62,** when connection to the dispensing unit **16** is established, to permit usage of the composite cable assembly **11.** Alternatively, or additionally, micro-switches **33** can be used in the dispensing unit **16** for identifying simultaneous connection of the fluid coupler **14** and the electric coupler **15,** and permit usage of the composite cable assembly **11.**

**Fig. 4D** shows principal structure of the electric coupler **64** according to some possible embodiments. The electric coupler **64** is a generally elongated cylindrical element comprising four electric contact areas **64a, 64b, 64c** and **64d,** arranged along its length and separated by electrically insulating elements **66.** Each of the electric wires **11w** of the composite cable assembly **11** is electrically connected to a respective one of the electric contact areas **64a, 64b, 64c** and **64d,** of the electric coupler **64.** In this non-limiting example two of the wires **CTR** are used to communicate control and/or data signals, and two other wires **PWR** are used for low voltage power supply. Any other arrangement/order of the wires is of course possible.

**Figs. 5A** to **5C** schematically illustrate a composite connector arrangement **12"** according to some other possible embodiments. The composite connector arrangements **12'** (shown in **Figs. 3A and 3B****)** and **12"** share many similar features designated by same reference numerals. As explained hereinbelow in details, the main differences between these composite connector arrangements is in the configuration of the partitioning assembly **63',** and the connection mechanism of the electric coupler **15,** of the composite connector arrangement **12".**

As seen in **Fig. 5A****,** the partitioning assembly **63'** perpendicularly extends from a closure element **52** of the composite connector arrangement **12",** and in this non-limiting example an orienting projection **38** is not used. Optionally, a circular groove **52g** is formed about the partitioning assembly **63'** for placing an O-ring **63r** therein for reducing movement and for sealable connection to the cylindrical socket **17t** of the water dispensing units **16,** to thereby prevent unintentional disconnection and water and/or moisture from entering the electrical contacts. The closure element **52** comprises an electric connector opening **52e** configured for passage of the electric coupler **15** therethrough, and a water connector opening **52f** configured for passage of the fluid coupler **14** therethrough.

In this embodiment the electric coupler **15** is held by a slidable carrier **12m** movably mounted inside the composite connector arrangement **12"** and pressed by an elastic element (*e.g.*, spring) **55** against an inner wall portion **(63w** in **Figs. 6A** to **6C****)** of the closure element **52.** The fluid coupler **14** comprises a male connector portion **14z** configured to be externally introduced through the water connector opening **52f** into the composite connector arrangement **12"** and firmly and sealably received in a distal opening of the water tube **11q.** As shown on **Fig. 5B****,** the water dispensing unit **16** comprises a laterally oriented gripping mechanism having a lateral release button **44h** configured to laterally move the ring-shaped latch plate **44f** for releasing its grip over the fluid coupler **14,** and ejecting the release pin **44p,** as described hereinabove in details with reference to **Figs. 4B** and **4C****.**

**Fig. 5C** shows the composite connector arrangement **12"** after the electric coupler **15** is received in the electric coupler **17c** of the dispensing unit **16,** and the fluid coupler **14** is received in the fluid coupler **44c** of the water dispensing unit **16.** In this state the **O-**rings, **63r** and **14r,** are tightly received inside their respective socket **17t** and coupler **44c,** and the release pin **44p** is pressed inwardly to release the latch plate **44f,** to thereby form a grip over the fluid coupler **14** and immobilize the composite connector arrangement **12"** in place.

**Figs. 6A** to **6C** are sectional views schematically illustrating connection of the composite connector arrangement **12"** to the water dispensing unit **16.** **Fig. 6A** shows the composite connector arrangement **12"** before it is connected to the water dispensing unit **16.** As seen, in this state the slidable carrier **12m** is pressed by the elastic element **55** against the inner wall portion **63w** of the closure element **52.**

**Figs. 6B** shows the composite connector arrangement **12"** during its connection to the water dispensing unit **16,** before the latch plate **44f** is released into its engaged state. As shown, in this state the electric coupler **15** is received in the electric coupler **17c** of the water dispensing unit **16,** but the partitioning assembly **63'** and the fluid coupler **14** are not fully received in the socket **17t** and coupler **44c** of the water dispensing unit **16,** respectively *i.e.,* sealable connection of the water dispensing unit **16** is not yet established.

**Fig. 6C** shows the composite connector arrangement **12"** once it is fully connected to the water dispensing unit **16.** In this state partitioning assembly **63'** and the fluid coupler **14** are fully and sealably received in the socket **17t** and coupler **44c** of the water dispensing unit **16,** respectively, and the latch plate **44f** is released into its engaged state to immobilize the composite connector arrangement **12"** in place. As the composite connector arrangement **12"** transits between the states shown in **Figs. 6B** and **6C** the slidable carrier **12m** abuts a wall potion of the water dispensing unit **16** and thus become immobilized while all other elements of the composite connector arrangement **12"** are further moved towards engagement with the respective couplers of the water dispensing unit **16.** The abutment of the slidable carrier **12m** to the wall potion of the water dispensing unit 16 thus cause the elastic element **55** to become compressed as the couplers of the composite connector arrangement **12"** are further pushed into the couplers of the water dispensing unit **16.**

The compression of the elastic element **55** in the fully connected state of the composite connector arrangement **12"** is configured to keep the electric coupler **15** in mechanic and electric connection with the electric coupler **17c** of the water dispensing unit **16,** and to prevent disconnection if, for any reason, the composite connector arrangement **12"** is accidently displaced after the connection is established. For example, if a force is applied on the composite connector arrangement **12"** after it is connector to the water dispensing unit **16,** due to the locking by the latch plate **44f** over the fluid coupler **14** the partitioning assembly **63'** can be displaced and moved outwardly from the cylindrical socket **17t.** However, due to the pressure force applied by the elastic element **55** such outward displacements of the partitioning assembly **63'** will not move the electric coupler **15,** which will thus maintain its mechanic and electric connection to the coupler **17c** of the water dispensing unit **16.**

This configuration of the electric coupling mechanism provide some degree of freedom for movement of the elements of the composite connector arrangement **12"** with respect to the water dispensing unit **16.** In some embodiments the electric coupling mechanism is configured to permit outward displacements of the composite connector arrangement **12"** of about 2.5mm, while maintaining the electric coupler **15** in mechanic and electric connection with the coupler **17c** of the water dispensing unit **16.**

As shown in **Figs. 6A** to **6C****,** an identification circuitry **21** and a corresponding detection circuitry **31** can be used as described hereinabove in details for authenticating the composite cable assembly. Alternatively, or additionally, the micro-switches **33** can be used for identifying simultaneous connection of the fluid and electric couplers. The different elements and components of the composite connector arrangements shown in specific figures and described hereinabove with respect to a respective specific embodiment can be used in any other one of the embodiments shown and described hereinabove with respect to any other figure.

## Claims

1. A composite cable assembly (11) comprising a fluid tube (11q), an electric cable (11e), an isolating sleeve (11j) accommodating said fluid tube and electric cable, and a composite connector arrangement (12), said composite connector arrangement configured to simultaneously establish fluid communication and electrical connection with respective connectivity means of a water dispensing unit (16) upon connection of the composite connector arrangement to said water dispensing unit, and **characterized by** that the composite cable assembly comprises
a movable carrier (12m) and an elastic element (55) mounted inside the composite connector arrangement, said movable carrier configured to carry an electric coupler (15) and move inside said composite connector arrangement against forces applied by said elastic element, to thereby provide a degree of freedom for movements of said composite connector arrangement while maintaining electrical connection of said electric coupler.

2. The cable assembly of claim 1, comprising distinct isolated electrical and water connection zones (12e,12w) in the composite connector arrangement, said electrical connection zone comprising an electric coupler (15,64) configured to electrically connect the electric cable of the composite cable assembly to electrical wires of the water dispensing unit, and said water connection zone comprising a fluid coupler (14) configured to establish fluid communication between the water tube and a fluid port of the fluid dispensing unit.

3. The cable assembly of claim 1 or 2, comprising a partitioning member (12b,63) physically buffering between the electrical and water connection zones of the composite connector arrangement for preventing passage of water from the water connection zone to the electrical connection zone, optionally wherein the electrical connection zone is located above the water connection zone to substantially prevent migration of water from the water connection zone to the electrical connection zone.

4. The cable assembly of claim 3, wherein the partitioning member is implemented by a tongue element protruding from a surface of the composite connector arrangement and configured to guarantee proper orientation of the composite connector assembly and accurate alignment of the electric and fluid couplers when connected to the water dispensing unit.

5. The cable assembly of claim 3, wherein the partitioning member is a cylindrical element (63) configured to laterally enclose the electric coupler thereinside, optionally further comprising an orienting projection axially extending along a length of the partitioning member, and configured to guarantee proper orientation of the composite connector assembly and accurate alignment of the electric and fluid couplers when connected to the water dispensing unit.

6. The cable assembly of any one of claims 2 to 5, wherein the electric coupler is a type of male plug connector having a number of electrically insulated electrical contacts distributed along its length.

7. The cable assembly of claim 6, wherein the partitioning member comprises a number of elongated openings (63e) axially extending along length thereof for forming a plurality of arch-shaped tongues (63t), optionally wherein at least one of the plurality of arch-shaped tongues is longer, or shorter, than the other arch-shaped tongues, to guarantee proper orientation of the composite connector arrangement and accurate alignment of the electric and fluid couplers, when connected to the water dispensing unit.

8. The cable assembly of any one of the preceding claims, wherein the fluid coupler is configured to be received in a locking mechanism (44f) provided in the water dispensing unit and configured to substantially immobilize it.

9. The cable assembly of any one of the preceding claims, wherein the electric cable comprises at least one electric wire (11e) configured to communicate control and/or data signals, and/or deliver a power supply to the water dispensing unit.

10. A composite connector arrangement (12) comprising an electric coupler (15) configured to establish electrical connection with electrical wires of a water dispensing unit (16), and a fluid coupler (14) configured to establish fluid communication with a fluid port of said water dispensing unit, said composite connector arrangement configured to simultaneously establish said fluid communication and electrical connection upon connection thereof to said water dispensing unit, and **characterized by** that the composite connector arrangement comprises
a movable carrier (12m) and an elastic element (55) mounted inside the composite connector arrangement, said movable carrier configured to carry the electric coupler and move inside said composite connector arrangement against forces applied by said elastic element, to thereby provide a degree of freedom for movements of said composite connector arrangement while maintaining electrical connection of said electric coupler.

11. The composite connector arrangement of claim 10, comprising distinct isolated electrical and water connection zones (12e,12w), said electrical connection zone comprising the electric coupler, and said water connection zone comprising the fluid coupler.

12. The composite connector arrangement of claim 11, comprising a partitioning member (12b,63) physically buffering between the electrical and water connection zones for preventing passage of water from said water connection zone to said electrical connection zone.

13. The composite connector arrangement of claim 12, wherein the partitioning member is implemented by a tongue element protruding from a surface of the composite connector arrangement and configured to guarantee proper orientation of the composite connector assembly and accurate alignment of the electric and fluid couplers when connected to the water dispensing unit, even more preferably wherein the electrical connection zone is located above the water connection zone to substantially prevent migration of water from the water connection zone to the electrical connection zone.

14. The composite connector arrangement of claim 12, wherein the partitioning member is a cylindrical element (63) configured to laterally enclose the electric coupler thereinside.

15. The composite connector arrangement of claim 14, wherein the electric coupler is a type of male plug connector having a number of electrically insulated electrical contacts distributed along its length, wherein the partitioning member is a cylindrical element configured to concentrically and laterally enclose the electric coupler thereinside.

16. The composite connector arrangement of claim 14 or 15, wherein the partitioning member comprises a number of elongated openings (63e) axially extending along length thereof for forming a plurality of arch-shaped tongues (63t), and wherein at least one of the plurality of arch-shaped tongues is longer, or shorter, than the other arch-shaped tongues, to guarantee proper orientation of the composite connector arrangement and accurate alignment of the electric and fluid couplers, when connected to the water dispensing unit.

17. The composite connector arrangement of any one of claims 10 to 16, wherein the fluid coupler is configured to be received in a locking mechanism (44f) provided in the water dispensing unit and configured to substantially immobilize it.

18. The composite connector arrangement of any one of claims 10 to 16, comprising an identification mechanism for authentication thereof.

19. The composite connector arrangement of any one of claims 10 to 17, wherein the electric coupler comprises at least one electric wire (11e) that is configured to communicate control and/or data signals, and/or to deliver a power supply to the water dispensing unit.

## Patentansprüche

1. Verbundkabelanordnung (11), umfassend einen Fluidschlauch (11q), ein elektrisches Kabel (11e), eine Isolierhülse (11j), die den Fluidschlauch und das elektrische Kabel aufnimmt, und eine Verbundverbindereinrichtung (12), wobei die Verbundverbindereinrichtung konfiguriert ist, um gleichzeitig eine Fluidkommunikation und eine elektrische Verbindung mit jeweiligen Verbindungsmitteln einer Wasserabgabeeinheit (16) beim Verbinden der Verbundverbindereinrichtung mit der Wasserabgabeeinheit herzustellen, und **dadurch gekennzeichnet, dass** die Verbundkabelanordnung
einen beweglichen Träger (12m) und ein elastisches Element (55) umfasst, die innerhalb der Verbundverbindereinrichtung montiert sind, wobei der bewegliche Träger konfiguriert ist, um einen elektrischen Koppler (15) zu tragen und sich innerhalb der Verbundverbindereinrichtung gegen Kräfte zu bewegen, die durch das elastische Element ausgeübt werden, um dadurch einen Freiheitsgrad für Bewegungen der Verbundverbindereinrichtung bereitzustellen, während die elektrische Verbindung des elektrischen Kopplers aufrechterhalten wird.

2. Kabelanordnung nach Anspruch 1, umfassend getrennte, isolierte Strom- und Wasserverbindungszonen (12e, 12w) in der Verbundverbindereinrichtung, wobei die Stromverbindungszone einen elektrischen Koppler (15, 64) umfasst, der konfiguriert ist, um das elektrische Kabel der Verbundkabelanordnung elektrisch mit elektrischen Drähten der Wasserausgabeeinheit zu verbinden, und wobei die Wasserverbindungszone einen fluidischen Koppler (14) umfasst, der konfiguriert ist, um eine Fluidkommunikation zwischen dem Wasserschlauch und einem Fluidanschluss der Fluidabgabeeinheit herzustellen.

3. Kabelanordnung nach Anspruch 1 oder 2, umfassend ein Trennteil (12b, 63), das physikalisch zwischen der Strom- und der Wasserverbindungszone der Verbundverbindereinrichtung puffert, um den Durchtritt von Wasser von der Wasserverbindungszone zu der Stromverbindungszone zu verhindern, optional wobei sich die Stromverbindungszone oberhalb der Wasserverbindungszone befindet, um eine Migration von Wasser von der Wasserverbindungszone in die Stromverbindungszone im Wesentlichen zu verhindern.

4. Kabelanordnung nach Anspruch 3, wobei das Trennteil durch ein Zungenelement implementiert ist, das von einer Oberfläche der Verbundverbindereinrichtung vorsteht und konfiguriert ist, um eine korrekte Ausrichtung der Verbundverbinderanordnung und eine genaue Ausrichtung des elektrischen und des fluidischen Kopplers zu gewährleisten, wenn sie mit der Wasserausgabeeinheit verbunden sind.

5. Kabelanordnung nach Anspruch 3, wobei das Trennteil ein zylindrisches Element (63) ist, das konfiguriert ist, um den elektrischen Koppler darin seitlich zu umschließen, optional ferner umfassend einen Ausrichtungsvorsprung, der sich axial entlang einer Länge des Trennteils erstreckt und konfiguriert ist, um eine korrekte Ausrichtung der Verbundverbinderanordnung und eine genaue Ausrichtung des elektrischen und des fluidischen Kopplers zu gewährleisten, wenn sie mit der Wasserausgabeeinheit verbunden sind.

6. Kabelanordnung nach einem der Ansprüche 2 bis 5, wobei der elektrische Koppler eine Art von Steckverbinder mit einer Anzahl elektrisch isolierter elektrischer Kontakte ist, die entlang seiner Länge verteilt ist.

7. Kabelanordnung nach Anspruch 6, wobei das Trennteil eine Anzahl von länglichen Öffnungen (63e) umfasst, die sich axial entlang seiner Länge erstreckt, um eine Vielzahl von bogenförmigen Zungen (63t) zu bilden, optional wobei mindestens eine der Vielzahl von bogenförmigen Zungen länger oder kürzer als die anderen bogenförmigen Zungen ist, um eine korrekte Ausrichtung der Verbundverbindereinrichtung und eine genaue Ausrichtung des elektrischen und des fluidischen Kopplers zu gewährleisten, wenn sie mit der Wasserausgabeeinheit verbunden sind.

8. Kabelanordnung nach einem der vorhergehenden Ansprüche, wobei der fluidische Koppler konfiguriert ist, um in einem Verriegelungsmechanismus (44f) aufgenommen zu werden, der in der Wasserabgabeeinheit bereitgestellt ist und konfiguriert ist, um ihn im Wesentlichen zu fixieren.

9. Kabelanordnung nach einem der vorhergehenden Ansprüche, wobei das elektrische Kabel mindestens einen elektrischen Draht (11e) umfasst, der konfiguriert ist, um Steuer- und/oder Datensignale zu kommunizieren und/oder eine Stromversorgung an die Wasserausgabeeinheit zu liefern.

10. Verbundverbindereinrichtung (12), umfassend einen elektrischen Koppler (15), der konfiguriert ist, um eine elektrische Verbindung mit elektrischen Drähten einer Wasserabgabeeinheit (16) herzustellen, und einen fluidischen Koppler (14), der konfiguriert ist, um eine Fluidkommunikation mit einem Fluidanschluss der Wasserabgabeeinheit herzustellen, wobei die Verbundverbindereinrichtung konfiguriert ist, um gleichzeitig die Fluidkommunikation und die elektrische Verbindung beim Verbinden derselben mit der Wasserabgabeeinheit herzustellen, und **dadurch gekennzeichnet ist, dass** die Verbundverbindereinrichtung einen beweglichen Träger (12m) und ein elastisches Element (55), die innerhalb der Verbundverbindereinrichtung montiert sind, umfasst, wobei der bewegliche Träger konfiguriert ist, um den elektrischen Koppler zu tragen und sich innerhalb der Verbundverbindereinrichtung gegen Kräfte zu bewegen, die durch das elastische Element ausgeübt werden, um dadurch einen Freiheitsgrad für Bewegungen der Verbundverbindereinrichtung bereitzustellen, während die elektrische Verbindung des elektrischen Kopplers aufrechterhalten wird.

11. Verbundverbindereinrichtung nach Anspruch 10, umfassend getrennte, isolierte Strom- und Wasserverbindungszonen (12e, 12w), wobei die Stromverbindungszone den elektrischen Koppler umfasst und wobei die Wasserverbindungszone den fluidischen Koppler umfasst.

12. Verbundverbindereinrichtung nach Anspruch 11, umfassend ein Trennteil (12b, 63), das physikalisch zwischen der Strom- und der Wasserverbindungszone puffert, um den Durchtritt von Wasser von der Wasserverbindungszone zu der Stromverbindungszone zu verhindern.

13. Verbundverbindereinrichtung nach Anspruch 12, wobei das Trennteil durch ein Zungenelement implementiert ist, das von einer Oberfläche der Verbundverbindereinrichtung vorsteht und konfiguriert ist, um eine korrekte Ausrichtung der Verbundverbinderanordnung und eine genaue Ausrichtung des elektrischen und des fluidischen Kopplers zu gewährleisten, wenn sie mit der Wasserausgabeeinheit verbunden sind, noch bevorzugter wobei sich die Stromverbindungszone oberhalb der Wasserverbindungszone befindet, um eine Migration von Wasser von der Wasserverbindungszone in die Stromverbindungszone im Wesentlichen zu verhindern.

14. Verbundverbindereinrichtung nach Anspruch 12, wobei das Trennteil ein zylindrisches Element (63) ist, das konfiguriert ist, um den elektrischen Koppler darin seitlich zu umschließen.

15. Verbundverbindereinrichtung nach Anspruch 14, wobei der elektrische Koppler eine Art von Steckverbinder mit einer Anzahl elektrisch isolierter elektrischer Kontakte ist, die entlang seiner Länge verteilt ist, wobei das Trennteil ein zylindrisches Element ist, das konfiguriert ist, um den elektrischen Koppler darin konzentrisch und seitlich zu umschließen.

16. Verbundverbindereinrichtung nach Anspruch 14 oder 15, wobei das Trennteil eine Anzahl von länglichen Öffnungen (63e) umfasst, die sich axial entlang seiner Länge erstreckt, um eine Vielzahl von bogenförmigen Zungen (63t) zu bilden, und wobei mindestens eine der Vielzahl von bogenförmigen Zungen länger oder kürzer als die anderen bogenförmigen Zungen ist, um eine korrekte Ausrichtung der Verbundverbindereinrichtung und eine genaue Ausrichtung des elektrischen und des fluidischen Kopplers zu gewährleisten, wenn sie mit der Wasserausgabeeinheit verbunden sind.

17. Verbundverbindereinrichtung nach einem der Ansprüche 10 bis 16, wobei der fluidische Koppler konfiguriert ist, um in einem Verriegelungsmechanismus (44f) aufgenommen zu werden, der in der Wasserabgabeeinheit bereitgestellt ist und konfiguriert ist, um ihn im Wesentlichen zu fixieren.

18. Verbundverbindereinrichtung nach einem der Ansprüche 10 bis 16, umfassend einen Identifikationsmechanismus zu deren Authentifizierung.

19. Verbundverbindereinrichtung nach einem der Ansprüche 10 bis 17, wobei der elektrische Koppler mindestens einen elektrischen Draht (11e) umfasst, der konfiguriert ist, um Steuer- und/oder Datensignale zu kommunizieren und/oder eine Stromversorgung an die Wasserausgabeeinheit zu liefern.

## Revendications

1. Ensemble câble composite (11) comprenant un tube de fluide (11q), un câble électrique (11e), un manchon isolant (11j) logeant ledit tube de fluide et ledit câble électrique, et un agencement de connecteur composite (12), ledit agencement de connecteur composite étant configuré pour établir simultanément une communication fluidique et une connexion électrique avec des moyens de connectivité respectifs d'une unité de distribution d'eau (16) lors de la connexion de l'agencement de connecteur composite à ladite unité de distribution d'eau, et **caractérisé en ce que** l'ensemble câble composite comprend
un support mobile (12m) et un élément élastique (55) monté à l'intérieur de l'agencement de connecteur composite, ledit support mobile étant configuré pour porter un coupleur électrique (15) et se déplacer à l'intérieur dudit agencement de connecteur composite contre les forces appliquées par ledit élément élastique, pour ainsi fournir un degré de liberté pour les mouvements dudit agencement de connecteur composite tout en maintenant la connexion électrique dudit coupleur électrique.

2. Ensemble câble selon la revendication 1, comprenant des zones de connexion électrique et d'eau isolées distinctes (12e, 12w) dans l'agencement de connecteur composite, ladite zone de connexion électrique comprenant un coupleur électrique (15, 64) configuré pour connecter électriquement le câble électrique de l'ensemble câble composite à des fils électriques de l'unité de distribution d'eau, et ladite zone de connexion d'eau comprenant un coupleur de fluide (14) configuré pour établir une communication fluidique entre le tube d'eau et un orifice de fluide de l'unité de distribution de fluide.

3. Ensemble câble selon la revendication 1 ou 2, comprenant un élément de séparation (12b, 63) tamponnant physiquement entre les zones de connexion électrique et d'eau de l'agencement de connecteur composite pour empêcher le passage de l'eau de la zone de connexion d'eau à la zone de connexion électrique, éventuellement dans lequel la zone de connexion électrique est située au-dessus de la zone de connexion d'eau pour empêcher sensiblement la migration de l'eau de la zone de connexion d'eau à la zone de connexion électrique.

4. Ensemble câble selon la revendication 3, dans lequel l'élément de séparation est mis en œuvre par un élément de languette faisant saillie à partir d'une surface de l'agencement de connecteur composite et configuré pour garantir une orientation correcte de l'ensemble de connecteur composite et un alignement précis des coupleurs électrique et de fluide lorsqu'ils sont connectés à l'unité de distribution d'eau.

5. Ensemble câble selon la revendication 3, dans lequel l'élément de séparation est un élément cylindrique (63) configuré pour enfermer latéralement le coupleur électrique à l'intérieur de celui-ci, comprenant éventuellement en outre une saillie d'orientation s'étendant axialement le long d'une longueur de l'élément de séparation, et configuré pour garantir une orientation correcte de l'ensemble de connecteur composite et un alignement précis des coupleurs électrique et de fluide lorsqu'ils sont connectés à l'unité de distribution d'eau.

6. Ensemble câble selon l'une quelconque des revendications 2 à 5, dans lequel le coupleur électrique est un type de connecteur mâle ayant un certain nombre de contacts électriques isolés électriquement répartis sur sa longueur.

7. Ensemble câble selon la revendication 6, dans lequel l'élément de séparation comprend un certain nombre d'ouvertures allongées (63e) s'étendant axialement le long de sa longueur pour former une pluralité de languettes en forme d'arc (63t), éventuellement dans lequel au moins une de la pluralité de languettes en forme d'arc est plus longue ou plus courte que les autres languettes en forme d'arc, pour garantir une orientation correcte de l'agencement de connecteur composite et un alignement précis des coupleurs électrique et de fluide, lorsqu'ils sont connectés à l'unité de distribution d'eau.

8. Ensemble câble selon l'une quelconque des revendications précédentes, dans lequel le coupleur de fluide est configuré pour être reçu dans un mécanisme de verrouillage (44f) prévu dans l'unité de distribution d'eau et configuré pour l'immobiliser sensiblement.

9. Ensemble câble selon l'une quelconque des revendications précédentes, dans lequel le câble électrique comprend au moins un fil électrique (11e) configuré pour communiquer des signaux de commande et/ou de données, et/ou pour fournir une alimentation électrique à l'unité de distribution d'eau.

10. Agencement de connecteur composite (12) comprenant un coupleur électrique (15) configuré pour établir une connexion électrique avec des fils électriques d'une unité de distribution d'eau (16), et un coupleur de fluide (14) configuré pour établir une communication fluidique avec un orifice de fluide de ladite unité de distribution d'eau, ledit agencement de connecteur composite étant configuré pour établir simultanément ladite communication fluidique et ladite connexion électrique lors de leurs connexion à ladite unité de distribution d'eau, et **caractérisé en ce que** l'agencement de connecteur composite comprend
un support mobile (12m) et un élément élastique (55) monté à l'intérieur de l'agencement de connecteur composite, ledit support mobile étant configuré pour porter le coupleur électrique et se déplacer à l'intérieur dudit agencement de connecteur composite contre les forces appliquées par ledit élément élastique, pour ainsi fournir un degré de liberté pour les mouvements dudit agencement de connecteur composite tout en maintenant la connexion électrique dudit coupleur électrique.

11. Agencement de connecteur composite selon la revendication 10, comprenant des zones de connexion électrique et d'eau isolées distinctes (12e, 12w), ladite zone de connexion électrique comprenant le coupleur électrique, et ladite zone de connexion d'eau comprenant le coupleur de fluide.

12. Agencement de connecteur composite selon la revendication 11, comprenant un élément de séparation (12b, 63) tamponnant physiquement entre les zones de connexion électrique et d'eau pour empêcher le passage de l'eau de ladite zone de connexion d'eau à ladite zone de connexion électrique.

13. Agencement de connecteur composite selon la revendication 12, dans lequel l'élément de séparation est mis en œuvre par un élément de languette faisant saillie d'une surface de l'agencement de connecteur composite et configuré pour garantir une orientation correcte de l'ensemble de connecteur composite et un alignement précis des coupleurs électrique et de fluide lorsqu'ils sont connectés à l'unité de distribution d'eau, encore plus préférablement dans lequel la zone de connexion électrique est située au-dessus de la zone de connexion d'eau pour empêcher sensiblement la migration de l'eau de la zone de connexion d'eau à la zone de connexion électrique.

14. Agencement de connecteur composite selon la revendication 12, dans lequel l'élément de séparation est un élément cylindrique (63) configuré pour enfermer latéralement le coupleur électrique à l'intérieur de celui-ci.

15. Agencement de connecteur composite selon la revendication 14, dans lequel le coupleur électrique est un type de connecteur mâle ayant un certain nombre de contacts électriques isolés électriquement répartis sur sa longueur, dans lequel l'élément de séparation est un élément cylindrique configuré pour enfermer de manière concentrique et latérale le coupleur électrique à l'intérieur de celui-ci.

16. Agencement de connecteur composite selon la revendication 14 ou 15, dans lequel l'élément de séparation comprend un certain nombre d'ouvertures allongées (63e) s'étendant axialement sur sa longueur pour former une pluralité de languettes en forme d'arc (63t), et dans lequel au moins une de la pluralité de languettes en forme d'arc est plus longue ou plus courte que les autres languettes en forme d'arc, pour garantir une orientation correcte de l'agencement de connecteur composite et un alignement précis des coupleurs électrique et de fluide, lorsqu'ils sont connectés à l'unité de distribution d'eau.

17. Agencement de connecteur composite selon l'une quelconque des revendications 10 à 16, dans lequel le coupleur de fluide est configuré pour être reçu dans un mécanisme de verrouillage (44f) prévu dans l'unité de distribution d'eau et configuré pour l'immobiliser sensiblement.

18. Agencement de connecteur composite selon l'une quelconque des revendications 10 à 16, comprenant un mécanisme d'identification pour son authentification.

19. Agencement de connecteur composite selon l'une quelconque des revendications 10 à 17, dans lequel le coupleur électrique comprend au moins un fil électrique (11e) qui est configuré pour communiquer des signaux de commande et/ou de données, et/ou pour fournir une alimentation électrique à l'unité de distribution d'eau.
